# EUROPEAN PATENT APPLICATION

(11) **EP 4 779 609 A2**
(43) Date of publication of application: **22.07.2026**
(21) Application number: 26150422.9
(22) Date of filing: 06.01.2026
(51) Int. Cl.: G08G 1/0962

(54) **INFORMATION PROCESSING SYSTEM, INFORMATION PROCESSING METHOD FOR INFORMATION PROCESSING SYSTEM, AND PROGRAM**

(30) Priority: 17.01.2025 JP 2025006987
(71) Applicant: TOYOTA JIDOSHA KABUSHIKI KAISHA, Toyota-Shi, Aichi-Ken 471-8571 (JP)
(72) Inventor: ISHIYAMA, Yuichi, TOYOTA-SHI, AICHI, 471-8571 (JP); ISHII, Atsushi, TOYOTA-SHI, AICHI, 471-8571 (JP); NASU, Fumihiro, TOYOTA-SHI, AICHI, 471-8571 (JP); SUGAHARA, Hikaru, NAGOYA-SHI, AICHI, 453-6113 (JP)
(74) Representative: Cabinet Beau de Loménie

(57) **Abstract**

An information processing system comprises: a first traffic regulation information acquisition unit that acquires first traffic regulation information from a captured image of an external camera of a vehicle; a second traffic regulation information acquisition unit that acquires second traffic regulation information from map information associated with information related to traffic regulations and positional information of the vehicle on a map; and an information processing unit that processes the second traffic regulation information as a correction candidate when, in a case where contents of the first traffic regulation information and the second traffic regulation information at the same position are different, it is determined from a travel history of the vehicle that the vehicle was traveling so as to comply with the traffic regulation of the first traffic regulation information.

## Description

### CROSS-REFERENCE TO RELATED APPLICATIONS

This application is based upon and claims the benefit of priority from Japanese Patent Application No. 2025-006987, filed on January 17, 2025, the entire contents of which are incorporated herein by reference and to which the person of the art can refer when considering the present disclosure.

### TECHNICAL FIELD

The present disclosure relates to an information processing system, an information processing method for the information processing system, and a program.

### BACKGROUND

In the related art, Japanese Unexamined Patent Application Publication No. 2017-067464 is known as a technical document related to an information processing system mounted on a vehicle. This publication discloses an information processing apparatus that compares a sign on a road captured by a vehicle-mounted camera with sign information of road information data, and causes a driver to select one of them when the sign on the road captured by the vehicle-mounted camera and the sign information of the road information data are different.

### SUMMARY

However, in the conventional information processing apparatus described above, the driver is caused to make a selection each time erroneous recognition of a sign on a road captured by the vehicle-mounted camera occurs, which may cause a burden on the driver.

According to a first aspect of the present disclosure, there is provided an information processing system that processes information related to traffic regulations of a road on which a vehicle travels, the information processing system comprising: a first traffic regulation information acquisition unit configured to acquire first traffic regulation information, which is information of traffic regulations of the road on which the vehicle travels, based on a road sign or a road surface marking captured in a captured image of an external camera of the vehicle; a second traffic regulation information acquisition unit configured to acquire second traffic regulation information, which is information of traffic regulations of the same type as the first traffic regulation on the road, based on map information associated with information related to traffic regulations and positional information of the vehicle on a map; and an information processing unit configured to process the second traffic regulation information as a correction candidate when, in a case where contents of the first traffic regulation information and the second traffic regulation information at the same position are different, it is determined from a travel history of the vehicle that the vehicle was traveling so as to comply with the traffic regulation of the first traffic regulation information.

According to the information processing system according to the first aspect of the present disclosure, when the contents of the first traffic regulation information and the second traffic regulation information at the same position are different, and when it is determined from the travel history of the vehicle that the vehicle was traveling so as to comply with the traffic regulation of the first traffic regulation information, the second traffic regulation information is processed as a correction candidate, so that it is possible to reduce a burden on a user as compared with a conventional method of causing the user to make a selection, and it is possible to appropriately process the second traffic regulation information as a correction candidate based on the travel history of the vehicle.

In the information processing system according to the aspect of the present disclosure described above, the first traffic regulation information may be first speed limit information, which is information of a speed limit acquired based on a road sign or a road surface marking captured in the captured image of the external camera of the vehicle, the second traffic regulation information may be second speed limit information, which is information of a speed limit acquired based on the map information and the positional information of the vehicle on the map, and the information processing unit may process the second speed limit information as a correction candidate when, in a case where contents of the first speed limit information and the second speed limit information at the same position are different, it is determined from the travel history of the vehicle that the vehicle was traveling so as to comply with the speed limit of the first speed limit information.

In the information processing system according to the aspect of the present disclosure described above, the first traffic regulation information may be first travel direction restriction information, which is information of a travel direction restriction acquired based on a road sign or a road surface marking captured in the captured image of the external camera of the vehicle, the second traffic regulation information may be second travel direction restriction information, which is information of a travel direction restriction acquired based on the map information and the positional information of the vehicle on the map, and the information processing unit may process the second travel direction restriction information as a correction candidate when, in a case where contents of the first travel direction restriction information and the second travel direction restriction information at the same position are different, it is determined from the travel history of the vehicle that the vehicle was traveling so as to comply with the travel direction restriction of the first travel direction restriction information.

In the information processing system according to the aspect of the present disclosure described above, the first traffic regulation information may be first overtaking prohibition presence/absence information, which is information of presence/absence of overtaking prohibition acquired based on a road sign or a road surface marking captured in the captured image of the external camera of the vehicle, the second traffic regulation information may be second overtaking prohibition presence/absence information, which is information of presence/absence of overtaking prohibition acquired based on the map information and the positional information of the vehicle on the map, and the information processing unit may process the second overtaking prohibition presence/absence information as a correction candidate when, at a position where the vehicle performed overtaking, a content of the first overtaking prohibition presence/absence information is that overtaking is possible and a content of the second overtaking prohibition presence/absence information is that overtaking is prohibited.

In the information processing system according to the aspect of the present disclosure described above, the information processing unit may not process the second traffic regulation information as a correction candidate when, in a case where contents of the first traffic regulation information and the second traffic regulation information at the same position are different, even when it is determined from the travel history of the vehicle that the vehicle was traveling so as to comply with the traffic regulation of the first traffic regulation information, the number of surrounding vehicles, which are other vehicles traveling around the vehicle, traveling without complying with the traffic regulation of the first traffic regulation information is equal to or greater than a predetermined number.

In the information processing system according to the aspect of the present disclosure described above, the information processing unit may prohibit processing of the correction candidate when a prohibition condition set in advance based on a travel environment or a travel state of the vehicle at the position is satisfied, even when it is determined from the travel history of the vehicle that the vehicle is traveling so as to comply with the traffic regulation of the first traffic regulation information.

According to another aspect of the present disclosure, there is provided an information processing method for an information processing system that processes information related to traffic regulations of a road on which a vehicle travels, the method including acquiring first traffic regulation information, which is information of traffic regulations of the road on which the vehicle travels, based on a road sign or a road surface marking captured in a captured image of an external camera of the vehicle; acquiring second traffic regulation information, which is information of traffic regulations of the same type as the first traffic regulation on the road, based on map information including information related to traffic regulations and positional information of the vehicle on a map; and processing the second traffic regulation information as a correction candidate when, in a case where contents of the first traffic regulation information and the second traffic regulation information are different, it is determined from a travel history of the vehicle that the vehicle was traveling so as to comply with the traffic regulation of the first traffic regulation information.

According to the information processing method for the information processing system according to another aspect of the present disclosure, when the contents of the first traffic regulation information and the second traffic regulation information at the same position are different, and when it is determined from the travel history of the vehicle that the vehicle was traveling so as to comply with the traffic regulation of the first traffic regulation information, the second traffic regulation information is processed as a correction candidate, so that it is possible to reduce a burden on a user as compared with a conventional method of causing the user to make a selection, and it is possible to appropriately process the second traffic regulation information as a correction candidate based on the travel history of the vehicle.

Still another aspect of the present disclosure is a non-transitory computer-readable storage medium storing a program that, when executed by a computer of a vehicle, causes the computer to perform a method for processing information related to a traffic regulation on a road on which the vehicle travels, the method comprising: acquiring first traffic regulation information, which is information on a traffic regulation of the road on which the vehicle travels, based on a road sign or a road marking shown in a captured image of an external camera of the vehicle; acquiring second traffic regulation information, which is information on a traffic regulation of the same type as the first traffic regulation on the road, based on map information including information on the traffic regulation and position information of the vehicle on a map; and processing the second traffic regulation information as a correction candidate when contents of the first traffic regulation information and the second traffic regulation information at a same position are different, and when it is determined from a travel history of the vehicle that the vehicle has traveled so as to comply with the traffic regulation of the first traffic regulation information..

According to the program according to further another aspect of the present disclosure, when the contents of the first traffic regulation information and the second traffic regulation information at the same position are different, and when it is determined from the travel history of the vehicle that the vehicle was traveling so as to comply with the traffic regulation of the first traffic regulation information, the second traffic regulation information is processed as a correction candidate, so that it is possible to reduce a burden on a user as compared with a conventional method of causing the user to make a selection, and it is possible to appropriately process the second traffic regulation information as a correction candidate based on the travel history of the vehicle.

According to each of the aspects of the present disclosure, when the contents of the first traffic regulation information and the second traffic regulation information at the same position are different, it is possible to appropriately process the second traffic regulation information as a correction candidate based on the travel history of the vehicle.

### BRIEF DESCRIPTION OF THE DRAWINGS

FIG. 1 is a block diagram showing an information processing system according to an embodiment.
FIG. 2 is a block diagram showing an example of a configuration of a communication vehicle.
FIG. 3 is a diagram showing an example in which a speed limit sign is captured in a captured image of an external camera.
FIG. 4 is a diagram showing an example in which a stop sign and a stop line are captured in a captured image of an external camera.
FIG. 5 is a block diagram showing an example of a server of a data center.
FIG. 6 is a flowchart showing an example of information processing of the information processing system.
FIG. 7 is a flowchart showing an example of information processing when a type of traffic regulation is a speed limit.
FIG. 8 is a flowchart showing an example of information processing when a type of traffic regulation is a travel direction restriction.
FIG. 9 is a flowchart showing an example of information processing when a type of traffic regulation is presence/absence of overtaking prohibition.
FIG. 10 is a flowchart showing an example of correction candidate determination prohibition processing.
FIG. 11 is a flowchart showing an example of list-up processing in the server of the data center.

### DETAILED DESCRIPTION

Hereinafter, an embodiment of the present disclosure will be described with reference to the drawings.

### [Configuration of Information Processing System]

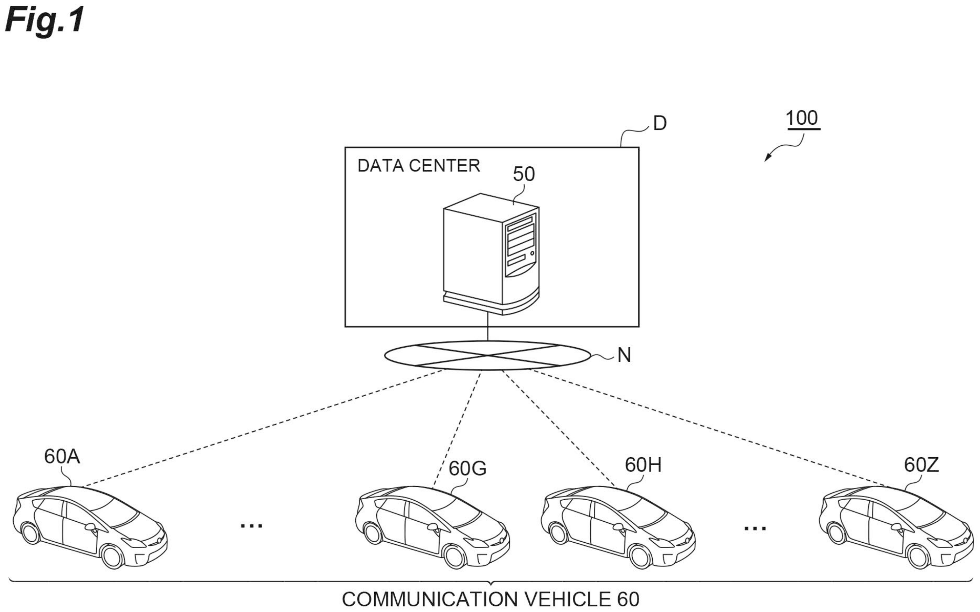

FIG. 1 is a block diagram showing an information processing system 100 according to an embodiment. The information processing system 100 shown in FIG. 1 includes a server 50 communicably connected to a plurality of communication vehicles 60 (60A to 60Z) via a communication network N. The information processing system 100 manages traffic regulation information associated with map information based on information collected from the plurality of communication vehicles 60. The number of communication vehicles 60 is not particularly limited as long as it is one or more.

The information processing system 100 may have a function of distributing latest map information and traffic regulation information to the communication vehicles 60. The communication network N is not particularly limited as long as it is a wireless communication network capable of exchanging information. The communication network N may be the Internet, may be a communication network for mobile terminals, or may be a communication network for road-to-vehicle communication.

The server 50 is, for example, a server provided in a data center D. The data center D is a facility that processes data related to vehicles. The server 50 does not necessarily need to be provided in the data center D, and may be provided in an arbitrary facility or a moving object, or may be a server on a cloud. The server 50 will be described in detail later. As will be described later, the information processing system 100 can also be a system completed within a vehicle.

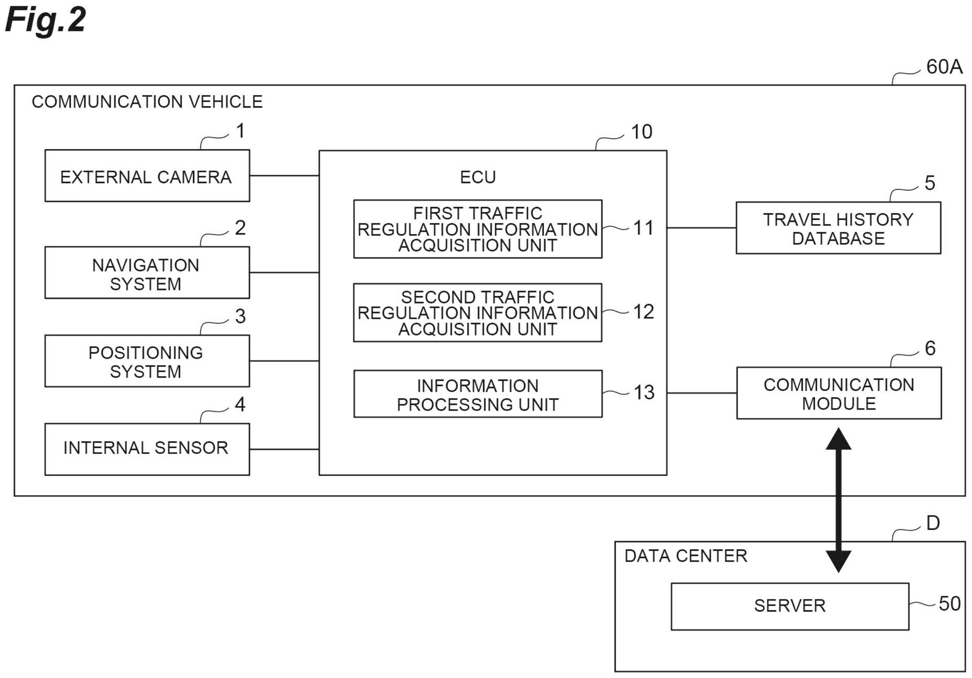

Hereinafter, the communication vehicle 60A among the plurality of communication vehicles 60 will be described as an example. FIG. 2 is a block diagram showing an example of a configuration of the communication vehicle 60A. As shown in FIG. 2, the communication vehicle 60A includes an ECU (Electronic Control Unit) 10. The ECU 10 is an electronic control unit having a Central Processing Unit (CPU) and a storage unit. The storage unit is configured of, for example, a Read Only Memory (ROM), a Random Access Memory (RAM), an Electrically Erasable Programmable Read-Only Memory (EEPROM), and the like. In the ECU 10, for example, various functions are realized by executing a program stored in the storage unit on the CPU. The ECU 10 may be configured of a plurality of electronic units.

The ECU 10 is connected to an external camera 1, a navigation system 2, a positioning system 3, an internal sensor 4, a travel history database 5, and a communication module 6.

The external camera 1 is an imaging device that captures an external situation of the communication vehicle 60A, and is provided, for example, on a back side of a windshield of the communication vehicle 60A to capture a front of the communication vehicle 60A. The external camera 1 transmits a captured image to the ECU 10.

The navigation system 2 is a system that displays a current position of the communication vehicle 60A and performs route guidance to a destination. The navigation system 2 operates in cooperation with a database that stores map information and a positioning system 3 for measuring the current position. The map information includes positional information of roads, information of road shapes, positional information of intersections and branch points, positional information of structures, and the like, and based on these pieces of information, the current position of the communication vehicle 60A is specified and an optimal route is calculated.

The navigation system 2 specifies a corresponding position in the map database based on the positional information of the communication vehicle 60A acquired from the positioning system 3. As a result, the current position of the communication vehicle 60A is displayed on the map and visually provided to a user such as a driver. Further, when performing route guidance to a destination, the navigation system 2 calculates an optimal route in consideration of traffic regulations and road conditions, and guides the user.

Further, the navigation system 2 also has a function for acquiring traffic regulation information. The map information includes traffic regulation information associated with positional information, and based on this, traffic regulation information of a road on which the communication vehicle 60A travels is acquired. The traffic regulation information includes, for example, information such as a speed limit and a travel direction restriction.

The navigation system 2 can also acquire latest map information and traffic regulation information by communicating with an external data center D via the communication module 6. As a result, it is possible to quickly respond to updates of map information and changes in traffic regulations, and to always provide the latest information to the user.

The positioning system 3 acquires positional information of the communication vehicle 60A using a Global Navigation Satellite System (GNSS) or the like, and transmits the positional information to the ECU 10. The positioning system 3 may use a Global Positioning System (GPS). The positioning system 3 may improve accuracy of the positional information of the communication vehicle 60A using dead reckoning or Simultaneous Localization and Mapping (SLAM).

The internal sensor 4 is a detection device that detects a travel state of the communication vehicle 60A. The internal sensor 4 includes a vehicle speed sensor and a yaw rate sensor. The vehicle speed sensor is a detector that detects a speed of the vehicle. The vehicle speed sensor transmits detected vehicle speed information to the ECU 10.

The yaw rate sensor is a detector that detects a yaw rate (rotation angular speed) around a vertical axis of a center of gravity of the vehicle. As the yaw rate sensor, for example, a gyro sensor can be used. The yaw rate sensor transmits detected yaw rate information of the vehicle to the ECU 10. The internal sensor 4 may include an acceleration sensor, and may include a steering angle sensor.

The travel history database 5 is a database that stores a past travel history of the communication vehicle 60A. The travel history includes at least positional information (positional information associated with time) of the communication vehicle 60A. The travel history may include data of a vehicle speed of the communication vehicle 60A, may include data of a yaw rate or a steering angle, and may include data of acceleration. The travel history may include guidance data of the navigation system 2. The travel history database 5 may be a Solid State Drive (SSD) or a Hard Disk Drive (HDD), and may be formed in the storage unit of the ECU 10.

The communication module 6 is a module for transmitting and receiving information between the communication vehicle 60A and the external data center D. The communication module 6 is connected to the server 50 of the data center D using wireless communication technology. As a result, the communication vehicle 60A can acquire latest map information and traffic regulation information from the data center D. Further, the communication module 6 also plays a role of transmitting a correction candidate of traffic regulation information from the communication vehicle 60A to the data center D.

Next, a functional configuration of the ECU 10 will be described. As shown in FIG. 2, the ECU 10 includes a first traffic regulation information acquisition unit 11, a second traffic regulation information acquisition unit 12, and an information processing unit 13.

The first traffic regulation information acquisition unit 11 acquires first traffic regulation information based on a road sign or a road surface marking captured in a captured image of the external camera 1. The first traffic regulation information is information of traffic regulations acquired from the captured image of the external camera 1. The traffic regulations include information related to at least one of a speed limit, a travel direction restriction, and overtaking prohibition. That is, the first traffic regulation information includes at least one of first speed limit information, first travel direction restriction information, and first overtaking prohibition presence/absence information acquired from the captured image of the external camera 1.

The road signs include various road signs such as a speed limit (maximum speed limit) sign, a stop sign, a one-way sign, a no-entry sign, a U-turn prohibition sign, an overtaking prohibition sign, and a pedestrian crossing sign. The road surface markings include various road surface markings such as a stop line, a speed limit road surface marking, a no-entry road surface marking, a U-turn prohibition road surface marking, a right/left turn prohibition road surface marking, a left turn only road surface marking, a right turn only road surface marking, an overtaking prohibition road surface marking, and a pedestrian crossing road surface marking.

The first traffic regulation information acquisition unit 11 acquires the first traffic regulation information by analyzing a road sign or a road surface marking captured by the external camera 1 using image recognition technology. Specifically, the first traffic regulation information acquisition unit 11 performs preprocessing such as noise removal, contrast adjustment, and resolution optimization on the captured image of the external camera 1. Next, the first traffic regulation information acquisition unit 11 performs feature point detection of the captured image. In the feature point detection, characteristic portions such as edges, corners, and textures in the image are extracted. For the feature point detection, for example, algorithms such as Canny edge detection and Harris corner detection are used.

The first traffic regulation information acquisition unit 11 extracts candidate regions of road signs and road surface markings based on these feature points. The first traffic regulation information acquisition unit 11 determines whether or not the candidate region is actually a road sign or a road surface marking using shape recognition or pattern matching technology for the candidate region. For example, in shape recognition, shapes of signs such as a circle, a triangle, and a quadrangle are detected, and in pattern matching, characters and symbols displayed on the sign are recognized.

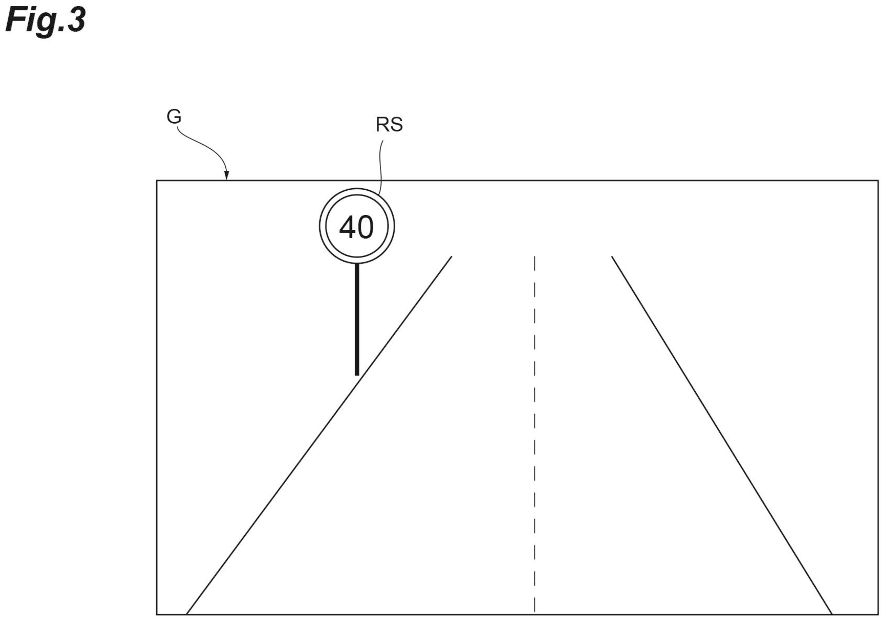

Here, FIG. 3 is a diagram showing an example in which a speed limit (maximum speed limit) road sign RS is captured in a captured image G of the external camera 1. For example, in the case of a Japanese speed limit road sign RS as shown in FIG. 3, the first traffic regulation information acquisition unit 11 detects a circular shape and reads a number displayed inside using Optical Character Recognition (OCR) technology. The read number (40 in the case of FIG. 3) is acquired as the first speed limit information.

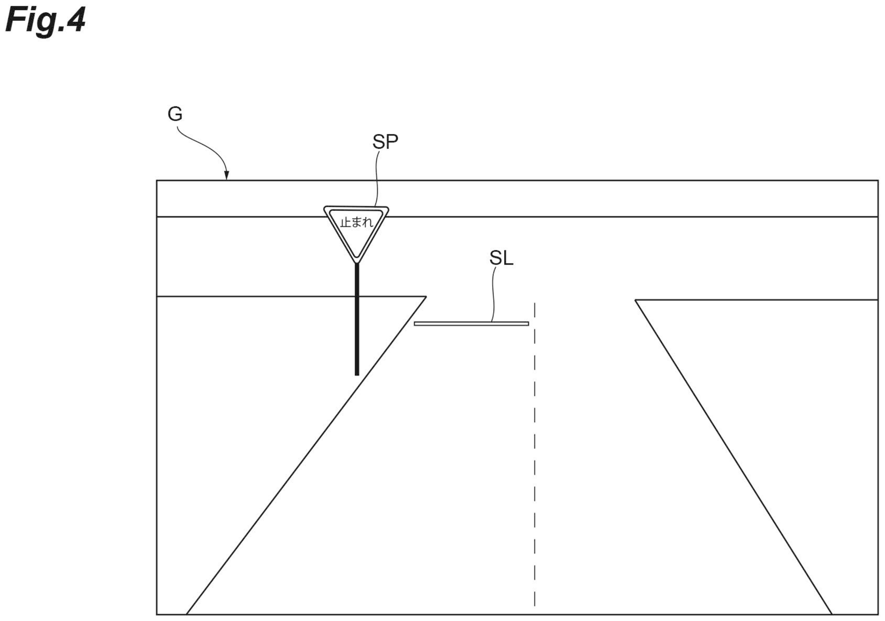

FIG. 4 is a diagram showing an example in which a stop sign SP and a stop line SL are captured in the captured image G of the external camera 1. For example, in the case of a Japanese stop sign SP shown in FIG. 4, the first traffic regulation information acquisition unit 11 detects a triangular shape and recognizes characters " 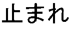 " (stop) displayed inside. Further, in the case of the stop line SL shown in FIG. 4, the first traffic regulation information acquisition unit 11 recognizes that it is the stop road surface marking by using an algorithm that specifies a line segment in the image for the candidate region on the road surface. Here, the stop by the stop line SL is treated as speed limit information, but may be treated as a type of traffic regulation information.

When the first traffic regulation information acquisition unit 11 recognizes a road sign or a road surface marking indicating a traffic regulation applied to a road section instead of a point, the first traffic regulation information acquisition unit 11 may acquire the first traffic regulation information such that the traffic regulation is applied in a road section until a road sign or a road surface marking indicating an end of application of the traffic regulation is recognized. Alternatively, when the first traffic regulation information acquisition unit 11 recognizes a road sign or a road surface marking indicating a traffic regulation applied to a road section, the first traffic regulation information acquisition unit 11 may acquire the first traffic regulation information such that the traffic regulation is applied to a road section of a certain distance from that point. The traffic regulation applied to a road section is, for example, a maximum speed limit, a one-way, a no-entry, or an overtaking prohibition. The traffic regulation applied to a point is, for example, a stop.

The method for acquiring the first traffic regulation information is not limited to the above-described content. The first traffic regulation information acquisition unit 11 may acquire the first traffic regulation information from the captured image of the external camera 1 using a machine learning algorithm or a deep learning algorithm.

The second traffic regulation information acquisition unit 12 acquires second traffic regulation information based on the map information of the navigation system 2 and the positional information of the positioning system 3. The second traffic regulation information is information of traffic regulations acquired from the map information associated with information of traffic regulations and the positional information of the communication vehicle 60A. The second traffic regulation information can include information that a traffic regulation associated with the map information does not exist at that position.

The map information of the navigation system 2 includes positions of roads and information of traffic regulations, and by collating with the position of the communication vehicle 60A acquired from the positioning system 3, the second traffic regulation information, which is information of traffic regulations of a road on which the vehicle is currently traveling, is acquired. The second traffic regulation information acquisition unit 12 acquires the second traffic regulation information from information of a speed limit, information of a travel direction restriction, information of presence/absence of overtaking prohibition, and the like associated with the map information and the positional information of the communication vehicle 60A.

The information processing unit 13 performs processing of a correction candidate based on the first traffic regulation information acquired by the first traffic regulation information acquisition unit 11, the second traffic regulation information acquired by the second traffic regulation information acquisition unit 12, and the travel history of the communication vehicle 60A. The processing of a correction candidate is processing of determining whether or not the second traffic regulation information acquired from the map information is a correction candidate. Hereinafter, processing of the information processing unit 13 will be described in detail.

The information processing unit 13 determines whether or not contents of the first traffic regulation information acquired by the first traffic regulation information acquisition unit 11 and the second traffic regulation information acquired by the second traffic regulation information acquisition unit 12 are different at the same position. A comparison target is a traffic regulation of the same type. The position may be, for example, a position of a road sign or a position of a road surface marking, may be a vehicle position when the communication vehicle 60 recognizes the road sign or the like, and may be a position convenient from a timing of arithmetic processing. Instead of a position, it may be treated as a road section.

The information processing unit 13 performs the above determination, for example, for each position where new first traffic regulation information is acquired by the first traffic regulation information acquisition unit 11. The information processing unit 13 may perform the above determination at every certain distance, and may perform the above determination at an intersection, a branch point, a point where a width changes, or other positions predetermined on a map.

Specifically, the information processing unit 13 determines whether or not contents of the first speed limit information and the second speed limit information are different at the same position. The second traffic regulation information to be compared with the first traffic regulation information is a traffic regulation of the same type.

For example, when 40 km/h speed limit information in FIG. 3 is acquired as the first speed limit information and 60 km/h speed limit information associated with the map information is acquired as the second speed limit information, the information processing unit 13 determines that the contents of the first speed limit information and the second speed limit information are different. For example, when stop information in FIG. 4 is acquired as the first speed limit information and 60 km/h speed limit information associated with the map information is acquired as the second speed limit information (when stop information is not acquired), the information processing unit 13 determines that the contents of the first speed limit information and the second speed limit information are different.

Similarly, the information processing unit 13 may determine whether or not contents of the first travel direction restriction information and the second travel direction restriction information are different at the same position. For example, when right/left turn prohibition (only straight ahead permitted) is acquired as the first travel direction restriction information and the second travel direction restriction information is straight ahead prohibition, the information processing unit 13 determines that the contents of the first travel direction restriction information and the second travel direction restriction information are different. The same applies to cases such as U-turn prohibition and one-way no-entry.

Further, the information processing unit 13 may determine whether or not contents of the first overtaking prohibition presence/absence information and the second overtaking prohibition presence/absence information are different at the same position. For example, when no overtaking prohibition (overtaking permitted) is acquired as the first overtaking prohibition presence/absence information and overtaking prohibition is acquired as the second overtaking prohibition presence/absence information, the information processing unit 13 determines that the contents of the first overtaking prohibition presence/absence information and the second overtaking prohibition presence/absence information are different.

When the information processing unit 13 determines that the contents of the first traffic regulation information and the second traffic regulation information are different at the same position, the information processing unit 13 refers to a past travel history recorded in the travel history database 5 of the communication vehicle 60A. The travel history may be data acquired from the positioning system 3 and the internal sensor 4 immediately before (within 1 second).

The information processing unit 13 determines whether or not the communication vehicle 60A is traveling so as to comply with the first traffic regulation information at a position where the contents of the first traffic regulation information and the second traffic regulation information are different, based on the travel history of the communication vehicle 60A. "The communication vehicle 60A is traveling so as to comply with the first traffic regulation information" means that the driver of the communication vehicle 60A is driving the communication vehicle 60A while being aware of the first traffic regulation information.

Specifically, when the first speed limit information at a predetermined position is 40 km/h and the second speed limit information is 60 km/h, the information processing unit 13 determines that the communication vehicle 60A is traveling so as to comply with the first speed limit information when the communication vehicle 60A is traveling at or below a first speed limit threshold value at that position.

The first speed limit threshold value is a threshold value set according to the first speed limit information. When the first speed limit information is 40 km/h, the first speed limit threshold value may be 42 km/h, may be 45 km/h, or may be 40 km/h. The first speed limit threshold value can be any speed around 40 km/h.

The meaning of a speed limit may differ depending on a country or a region. For example, there may be a case where 40 km/h is a strict upper limit speed and a case where 40 km/h is a recommended speed. For this reason, an appropriate threshold value is set based on laws and regulations of a country or a region. The same applies to traffic regulations other than speed limits. Further, an appropriate threshold value can be set in consideration of a measurement error of a travel speed.

When the speed limit of the first speed limit information is higher than the speed limit of the second speed limit information, the information processing unit 13 may perform determination based on a speed range because the communication vehicle 60A travels at or below the speed limit of the first speed limit information by traveling along the speed limit of the second speed limit information. When the first speed limit information at a predetermined position is 60 km/h and the second speed limit information is 40 km/h, the information processing unit 13 may determine that the communication vehicle 60A is traveling so as to comply with the first speed limit information when the communication vehicle 60A is traveling within a speed range corresponding to the first speed limit information at that position. The speed range corresponding to the first speed limit information is, for example, 55 km/h to 65 km/h. The speed range corresponding to the first speed limit information may be 50 km/h to 62 km/h, and may be any range as long as it can be determined that the driver of the communication vehicle 60A is traveling while being aware of the first speed limit information.

For example, when the first travel direction restriction information at a predetermined position is right/left turn prohibition (only straight ahead permitted) and the second travel direction restriction information is straight ahead prohibition, the information processing unit 13 determines that the communication vehicle 60A is traveling so as to comply with the first travel direction restriction information when the communication vehicle 60A goes straight at that position. The same applies to cases such as U-turn prohibition and one-way no-entry.

For example, when the first overtaking prohibition presence/absence information at a predetermined position is no overtaking prohibition (overtaking possible) and the second overtaking prohibition presence/absence information is overtaking prohibition, the information processing unit 13 may determine that the communication vehicle 60A is traveling so as to comply with the first overtaking prohibition presence/absence information when the communication vehicle 60A performs overtaking at that position.

When the information processing unit 13 determines that the communication vehicle 60A is traveling so as to comply with the first traffic regulation information at a position where the contents of the first traffic regulation information and the second traffic regulation information are different, the information processing unit 13 processes the second traffic regulation information as a correction candidate. The information processing unit 13 transmits, for example, information capable of specifying the second traffic regulation information, which is a correction candidate, to the server 50 of the data center D as correction candidate information.

The information capable of specifying the second traffic regulation information is, for example, positional information related to the second traffic regulation information. When an identification (ID) number is assigned to each traffic regulation associated with the map information, specification by the ID number is also possible. The information capable of specifying the second traffic regulation information may include the second traffic regulation information itself. Further, the information processing unit 13 may transmit version information of the map information used for acquiring the second traffic regulation information to the server 50.

Further, the information processing unit 13 may transmit the first traffic regulation information to the server 50 as additional information, and may transmit the travel history of the communication vehicle 60A used for determining the correction candidate of the second traffic regulation information to the server 50. The information processing unit 13 may transmit the captured image used for acquiring the first traffic regulation information to the server 50.

The information processing unit 13 may perform processing of a correction candidate in consideration of a travel situation of surrounding vehicles, which are other vehicles traveling around the communication vehicle 60A. The travel situation of the surrounding vehicles may be detected by a sensor of the communication vehicle 60A, may be acquired by inter-vehicle communication, or may be acquired via an external server such as the server 50.

Even when the communication vehicle 60A is traveling so as to comply with the first traffic regulation information at a position where the contents of the first traffic regulation information and the second traffic regulation information are different, the information processing unit 13 may not perform processing of a correction candidate of the second traffic regulation information when a certain number or more of surrounding vehicles traveling around the position without complying with the traffic regulation of the first traffic regulation information exist, because it cannot be said that reliability of the first traffic regulation information is high.

Specifically, even when the communication vehicle 60A is traveling so as to comply with the speed limit of 40 km/h of the first speed limit information at a position where the contents of the first speed limit information (speed limit 40 km/h) and the second speed limit information (speed limit 60 km/h) are different, the information processing unit 13 does not perform processing of a correction candidate of the second speed limit information when a certain number or more of surrounding vehicles traveling around 60 km/h without complying with the speed limit of 40 km/h of the first speed limit information exist.

Further, even when the communication vehicle 60A goes straight at a position where the contents of the first travel direction restriction information (right/left turn prohibition) and the second travel direction restriction information (straight ahead prohibition) are different, the information processing unit 13 may not perform processing of a correction candidate of the second travel direction restriction information when a certain number or more of surrounding vehicles making a right/left turn at the same position exist.

The certain number may be one, may be two, or may be three or more. This number may be changed according to a type of traffic regulation. The information processing unit 13 may set the certain number when the traffic regulation is a travel direction restriction to a smaller value as compared with when the traffic regulation is a speed limit. Specifically, the certain number when the traffic regulation is a speed limit may be set to three, and the certain number when the traffic regulation is a travel direction restriction may be set to one. This is because it is considered that there are fewer vehicles that make an error in a travel direction restriction such as right/left turn prohibition as compared with vehicles that exceed a speed limit. Similarly, the information processing unit 13 may set the certain number when the traffic regulation is a travel direction restriction to a smaller value as compared with when the traffic regulation is overtaking prohibition.

The information processing unit 13 may prohibit processing of the second traffic regulation information as a correction candidate even when the communication vehicle 60A is traveling so as to comply with the first traffic regulation information at a position where the contents of the first traffic regulation information and the second traffic regulation information are different, when a prohibition condition set in advance is satisfied. The information processing unit 13 determines whether or not the prohibition condition is satisfied based on a travel environment or a travel state of the communication vehicle 60A.

Specifically, when a travel state of the communication vehicle 60A is autonomous driving, the information processing unit 13 may determine that the prohibition condition is satisfied and prohibit processing of the correction candidate because travel of the communication vehicle 60A may not depend on a judgment of the driver. The autonomous driving may include driving support such as Adaptive Cruise Control (ACC) that automatically adjusts a vehicle speed. The information processing unit 13 may determine that the prohibition condition is not satisfied even when the travel state of the communication vehicle 60A is autonomous driving, when the driver is caused to select a vehicle speed, a travel direction, or execution of overtaking in consideration of traffic regulations.

Further, for example, when the first traffic regulation information is the first speed limit information, the information processing unit 13 may determine that the prohibition condition is satisfied when a travel environment of the communication vehicle 60A is traveling in a road construction section, because it is considered that the communication vehicle 60A is decelerating regardless of the traffic regulation. Whether or not the vehicle is traveling in a road construction section may be determined from the captured image of the external camera 1, or may be acquired by the navigation system 2 from a server such as a traffic information center.

Similarly, for example, when the first traffic regulation information is the first speed limit information, the information processing unit 13 may determine that the prohibition condition is satisfied when a travel state of the communication vehicle 60A is making a right/left turn or traveling on a curve, because it is considered that the communication vehicle 60A is decelerating regardless of the traffic regulation. Whether or not the vehicle is making a right/left turn can be determined from, for example, an operation state of a direction indicator light of the communication vehicle 60A. Whether or not the vehicle is traveling on a curve can be determined from, for example, a yaw rate or a steering angle of the communication vehicle 60A in a state where the direction indicator light of the communication vehicle 60A is not operating. Whether or not the vehicle is traveling on a curve may be determined from guidance information of the navigation system 2.

In addition, when a user of the communication vehicle 60A desires, the information processing unit 13 may cause the user to select whether or not to transmit information specifying the second traffic regulation information determined as a correction candidate to the server 50. In that case, only information permitted by the user is transmitted to the server 50.

The configuration of the communication vehicle 60A has been described above with reference to FIG. 2 as an example, but other communication vehicles 60B to 60Z can also have the same configuration. The communication vehicles 60B to 60Z do not necessarily need to have the same configuration as the communication vehicle 60A. The communication vehicles 60B to 60Z may have only a function of transmitting correction candidate information, and may include vehicles that only receive update information of map information of the navigation system 2.

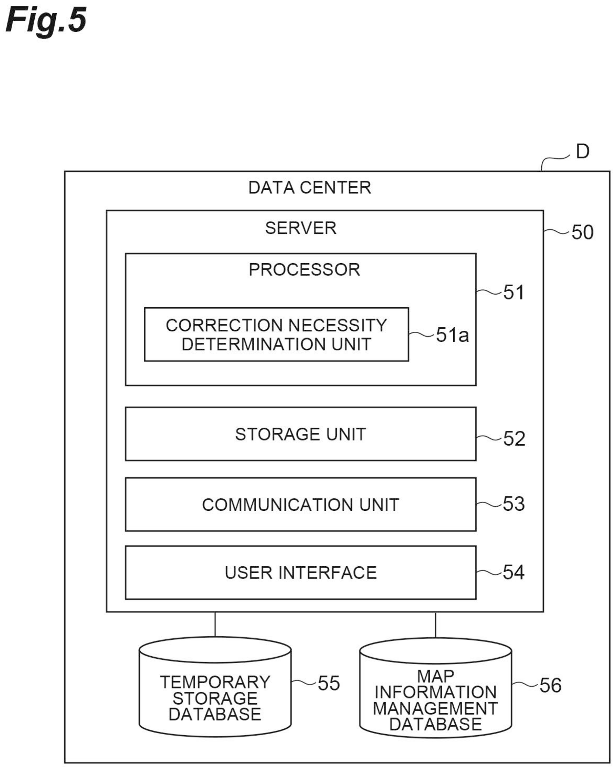

Next, the server 50 of the data center D will be described with reference to FIG. 5. FIG. 5 is a block diagram showing an example of a server of the data center. The data center D in the present embodiment shown in FIG. 2 is a facility that receives correction candidate information transmitted from the communication vehicles 60 (60A to 60Z) and updates map information.

The server 50 is disposed in the data center D and has various functions for processing correction candidates of traffic regulation information. The server 50 includes a processor 51, a storage unit 52, a communication unit 53, and a user interface 54. The server 50 may be configured of a plurality of servers.

The processor 51 is a central processing unit of the server 50, and operates various operating systems to control the server 50. The processor 51 is an arithmetic unit such as a CPU including a control device, an arithmetic device, a register, and the like. The processor 51 controls the storage unit 52, the communication unit 53, and the user interface 54.

The storage unit 52 is configured to include at least one of a memory and a storage. The memory is a recording medium such as a ROM or a RAM. The storage is a recording medium such as an HDD. The communication unit 53 is a communication device for performing communication with the communication vehicle 60. A network device, a network controller, a network card, or the like can be used for the communication unit 53. The user interface 54 is an input/output unit of the server 50 for a user such as an administrator. The user interface 54 includes an output device such as a display and a speaker, and an input device such as a touch panel.

Further, the server 50 is connected to a temporary storage database 55 and a map information management database 56. The temporary storage database 55 is a database that temporarily stores correction candidate information transmitted from the communication vehicles 60. The map information management database 56 is a database that manages latest map information to be distributed to the communication vehicles 60. In the map information management database 56, traffic regulation information associated with the map information is also managed.

As shown in FIG. 2, the processor 51 of the server 50 has a correction necessity determination unit 51a. The correction necessity determination unit 51a determines necessity of correction of traffic regulation information of the map information management database 56 based on correction candidates of traffic regulations transmitted from the communication vehicles 60 and stored in the temporary storage database 55.

For example, when correction candidates of the same content at the same position on a map are transmitted from a predetermined number or more of communication vehicles 60, the correction necessity determination unit 51a determines that correction of traffic regulation information of the map information management database 56 is necessary based on information of the correction candidate (information specifying the second traffic regulation information). The predetermined number may be 10, may be 20, may be 50, or may be 100. The predetermined number can be any number. Further, in this case, the "same position" may be treated as positional information of a certain range or section, and may be treated as the same position when they overlap even partially.

The correction necessity determination unit 51a lists information of correction candidates determined to require correction as final correction candidates, and stores them in the map information management database 56. Administrators working at the data center D make a final judgment on correction of traffic regulation information corresponding to the listed correction candidate information, and then execute the correction. The correction necessity determination unit 51a may directly correct the traffic regulation information of the map information management database 56.

### [Program]

A program causes the ECU 10 (computer) to operate as the first traffic regulation information acquisition unit 11, the second traffic regulation information acquisition unit 12, and the information processing unit 13 described above. The program is provided by a non-transitory recording medium such as a ROM or a semiconductor memory. Further, the program may be provided from a network or the like via wireless communication. Further, the program may cause the server 50 to operate as a part of the information processing unit 13.

### [Information Processing Method of Information Processing System]

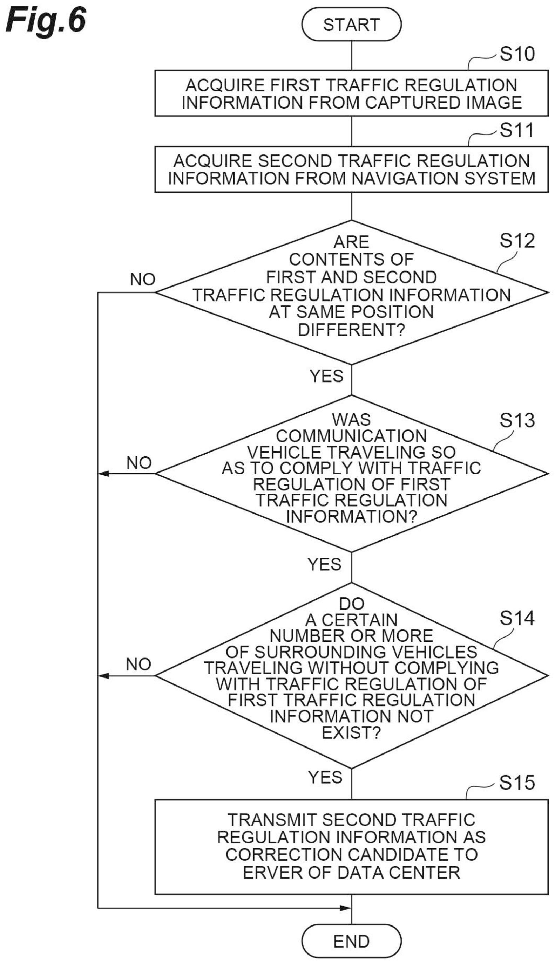

Next, an information processing method of the information processing system 100 according to the present embodiment will be described with reference to the drawings. FIG. 6 is a flowchart showing an example of information processing of the information processing system 100.

As shown in FIG. 6, the ECU 10 of the information processing system 100 acquires first traffic regulation information from a captured image of the external camera 1 by the first traffic regulation information acquisition unit 11 in step S10. This first traffic regulation information is acquired based on a road sign or a road surface marking, and includes, for example, information such as a speed limit or a stop. The first traffic regulation information acquisition unit 11 acquires the first traffic regulation information by, for example, analyzing the captured image of the external camera 1, detecting feature points in the image, and specifying a road sign or a road surface marking. Thereafter, the ECU 10 proceeds to step S11.

In step S11, the ECU 10 acquires second traffic regulation information from map information of the navigation system 2 by the second traffic regulation information acquisition unit 12. This second traffic regulation information is acquired based on the map information and positional information of the communication vehicle 60A. The second traffic regulation information acquisition unit 12 acquires the second traffic regulation information corresponding to a corresponding position from the map information of the navigation system 2. Thereafter, the ECU 10 proceeds to step S12.

In step S12, the ECU 10 determines whether or not contents of the first traffic regulation information and the second traffic regulation information at the same position are different by the information processing unit 13. The second traffic regulation information to be compared with the first traffic regulation information is a traffic regulation of the same type. The information processing unit 13 compares the first traffic regulation information and the second traffic regulation information, and confirms whether or not the contents match. When the contents of the first traffic regulation information and the second traffic regulation information are different (S12: YES), the ECU 10 proceeds to step S13. When the contents of the first traffic regulation information and the second traffic regulation information match (S12: NO), the ECU 10 ends the current information processing.

In step S13, the ECU 10 determines whether or not the communication vehicle 60A was traveling so as to comply with the traffic regulation of the first traffic regulation information at the above position by the information processing unit 13. The information processing unit 13 makes the above determination based on a travel history of the communication vehicle 60A stored in the travel history database 5. When it is determined that the communication vehicle 60A was traveling so as to comply with the traffic regulation of the first traffic regulation information (S13: YES), the ECU 10 proceeds to step S14. When it is not determined that the communication vehicle 60A was traveling so as to comply with the traffic regulation of the first traffic regulation information (S13: NO), the ECU 10 ends the current information processing.

In step S14, the ECU 10 determines whether or not a certain number or more of surrounding vehicles traveling without complying with the traffic regulation of the first traffic regulation information exist at the above position by the information processing unit 13. A travel situation of the surrounding vehicles may be detected by a sensor of the communication vehicle 60A, or may be acquired by inter-vehicle communication. When the ECU 10 determines that the number of surrounding vehicles traveling without complying with the traffic regulation of the first traffic regulation information is less than a certain number (S14: YES), the ECU 10 proceeds to step S15. When the ECU 10 determines that a certain number or more of surrounding vehicles traveling without complying with the traffic regulation of the first traffic regulation information exist (S14: NO), the ECU 10 ends the current information processing. Step S14 does not necessarily need to be provided.

In step S15, the ECU 10 transmits the second traffic regulation information as a correction candidate to the server 50 of the data center D by the information processing unit 13. The information processing unit 13 may transmit only information specifying the second traffic regulation information instead of the second traffic regulation information itself, and may also transmit the first traffic regulation information, which is highly likely to be a correct traffic regulation. Thereafter, the ECU 10 ends the current information processing.

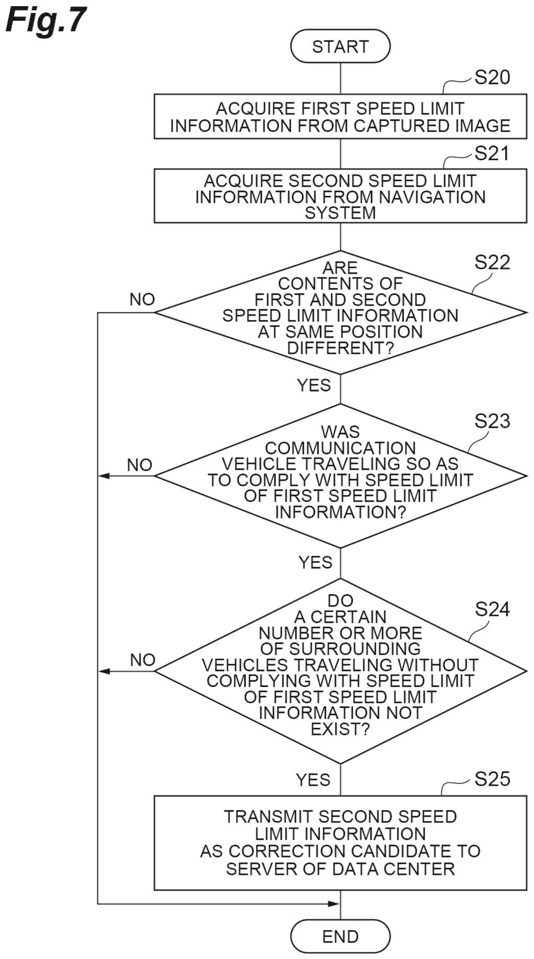

Next, information processing when a type of traffic regulation is a speed limit will be described. FIG. 7 is a flowchart showing an example of information processing when a type of traffic regulation is a speed limit.

As shown in FIG. 7, the ECU 10 acquires first speed limit information from a captured image of the external camera 1 by the first traffic regulation information acquisition unit 11 in step S20. The first traffic regulation information acquisition unit 11 acquires the first speed limit information by, for example, analyzing the captured image of the external camera 1, detecting feature points in the image, and specifying a road sign or a road surface marking. Thereafter, the ECU 10 proceeds to step S21.

In step S21, the ECU 10 acquires second speed limit information from map information of the navigation system 2 by the second traffic regulation information acquisition unit 12. The second traffic regulation information acquisition unit 12 acquires the second speed limit information corresponding to a corresponding position from the map information of the navigation system 2. Thereafter, the ECU 10 proceeds to step S22.

In step S22, the ECU 10 determines whether or not contents of the first speed limit information and the second speed limit information at the same position are different by the information processing unit 13. The information processing unit 13 compares the first speed limit information and the second speed limit information, and confirms whether or not the contents match. When the contents of the first speed limit information and the second speed limit information are different (S22: YES), the ECU 10 proceeds to step S23. When the contents of the first speed limit information and the second speed limit information match (S22: NO), the ECU 10 ends the current information processing.

In step S23, the ECU 10 determines whether or not the communication vehicle 60A was traveling so as to comply with the speed limit of the first speed limit information at the above position by the information processing unit 13. The information processing unit 13 makes the above determination based on a travel history of the communication vehicle 60A stored in the travel history database 5. When it is determined that the communication vehicle 60A was traveling so as to comply with the speed limit of the first speed limit information (S23: YES), the ECU 10 proceeds to step S24. When it is not determined that the communication vehicle 60A was traveling so as to comply with the speed limit of the first speed limit information (S23: NO), the ECU 10 ends the current information processing.

In step S24, the ECU 10 determines whether or not a certain number or more of surrounding vehicles traveling without complying with the speed limit of the first speed limit information exist at the above position by the information processing unit 13. A travel situation of the surrounding vehicles may be detected by a sensor of the communication vehicle 60A, or may be acquired by inter-vehicle communication. When the ECU 10 determines that the number of surrounding vehicles traveling without complying with the speed limit of the first speed limit information is less than a certain number (S24: YES), the ECU 10 proceeds to step S25. When the ECU 10 determines that a certain number or more of surrounding vehicles traveling without complying with the speed limit of the first speed limit information exist (S24: NO), the ECU 10 ends the current information processing. Step S24 does not necessarily need to be provided.

In step S25, the ECU 10 transmits the second speed limit information as a correction candidate to the server 50 of the data center D by the information processing unit 13. Thereafter, the ECU 10 ends the current information processing.

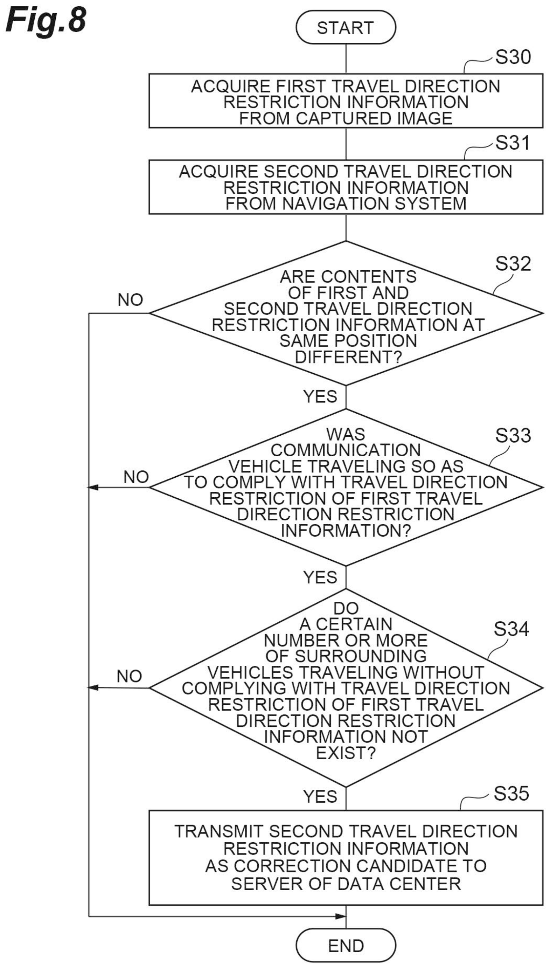

Next, information processing when a type of traffic regulation is a travel direction restriction will be described. FIG. 8 is a flowchart showing an example of information processing when a type of traffic regulation is a travel direction restriction.

As shown in FIG. 8, the ECU 10 acquires first travel direction restriction information from a captured image of the external camera 1 by the first traffic regulation information acquisition unit 11 in step S30. The first traffic regulation information acquisition unit 11 acquires the first travel direction restriction information by, for example, analyzing the captured image of the external camera 1, detecting feature points in the image, and specifying a road sign or a road surface marking. Thereafter, the ECU 10 proceeds to step S31.

In step S31, the ECU 10 acquires second travel direction restriction information from map information of the navigation system 2 by the second traffic regulation information acquisition unit 12. The second traffic regulation information acquisition unit 12 acquires the second travel direction restriction information corresponding to a corresponding position from the map information of the navigation system 2. Thereafter, the ECU 10 proceeds to step S32.

In step S32, the ECU 10 determines whether or not contents of the first travel direction restriction information and the second travel direction restriction information at the same position are different by the information processing unit 13. The information processing unit 13 compares the first travel direction restriction information and the second travel direction restriction information, and confirms whether or not the contents match. When the contents of the first travel direction restriction information and the second travel direction restriction information are different (S32: YES), the ECU 10 proceeds to step S33. When the contents of the first travel direction restriction information and the second travel direction restriction information match (S32: NO), the ECU 10 ends the current information processing.

In step S33, the ECU 10 determines whether or not the communication vehicle 60A was traveling so as to comply with the travel direction restriction of the first travel direction restriction information at the above position by the information processing unit 13. The information processing unit 13 makes the above determination based on a travel history of the communication vehicle 60A stored in the travel history database 5. When it is determined that the communication vehicle 60A was traveling so as to comply with the travel direction restriction of the first travel direction restriction information (S33: YES), the ECU 10 proceeds to step S34. When it is not determined that the communication vehicle 60A was traveling so as to comply with the travel direction restriction of the first travel direction restriction information (S33: NO), the ECU 10 ends the current information processing.

In step S34, the ECU 10 determines whether or not a certain number or more of surrounding vehicles traveling without complying with the travel direction restriction of the first travel direction restriction information exist at the above position by the information processing unit 13. A travel situation of the surrounding vehicles may be detected by a sensor of the communication vehicle 60A, or may be acquired by inter-vehicle communication. When the ECU 10 determines that the number of surrounding vehicles traveling without complying with the travel direction restriction of the first travel direction restriction information is less than a certain number (S34: YES), the ECU 10 proceeds to step S35. When the ECU 10 determines that a certain number or more of surrounding vehicles traveling without complying with the travel direction restriction of the first travel direction restriction information exist (S34: NO), the ECU 10 ends the current information processing. Step S34 does not necessarily need to be provided.

In step S35, the ECU 10 transmits the second travel direction restriction information as a correction candidate to the server 50 of the data center D by the information processing unit 13. Thereafter, the ECU 10 ends the current information processing.

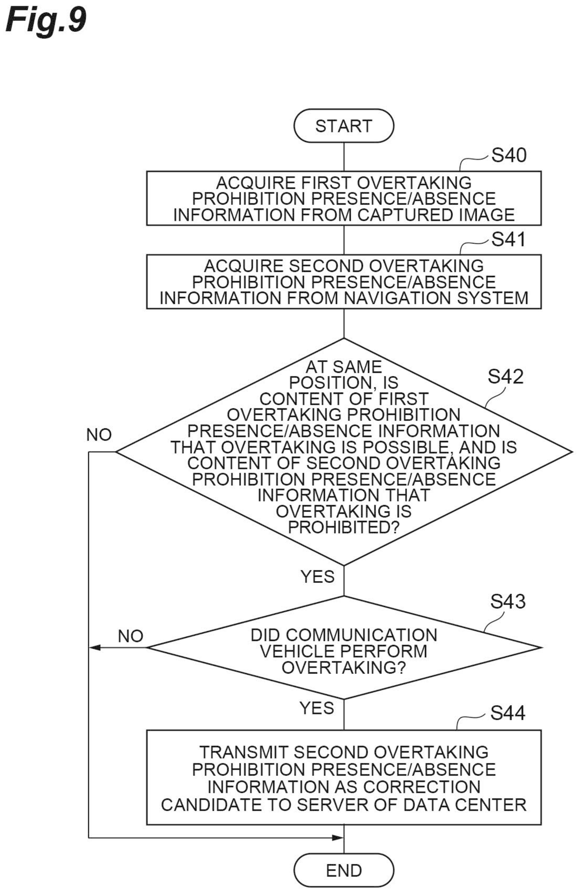

Next, information processing when a type of traffic regulation is presence/absence of overtaking prohibition will be described. FIG. 9 is a flowchart showing an example of information processing when a type of traffic regulation is presence/absence of overtaking prohibition.

As shown in FIG. 9, the ECU 10 acquires first overtaking prohibition presence/absence information from a captured image of the external camera 1 by the first traffic regulation information acquisition unit 11 in step S40. The first traffic regulation information acquisition unit 11 acquires the first overtaking prohibition presence/absence information by, for example, analyzing the captured image of the external camera 1, detecting feature points in the image, and specifying a road sign or a road surface marking. Thereafter, the ECU 10 proceeds to step S41.

In step S41, the ECU 10 acquires second overtaking prohibition presence/absence information from map information of the navigation system 2 by the second traffic regulation information acquisition unit 12. The second traffic regulation information acquisition unit 12 acquires the second overtaking prohibition presence/absence information corresponding to a corresponding position from the map information of the navigation system 2. Thereafter, the ECU 10 proceeds to step S42.

In step S42, the ECU 10 determines by the information processing unit 13 whether a content of the first overtaking prohibition presence/absence information is that overtaking is possible and a content of the second overtaking prohibition presence/absence information is that overtaking is prohibited at the same position. When the content of the first overtaking prohibition presence/absence information is that overtaking is possible and the content of the second overtaking prohibition presence/absence information is that overtaking is prohibited (S42: YES), the ECU 10 proceeds to step S43. When the content of the first overtaking prohibition presence/absence information is not that overtaking is possible or the content of the second overtaking prohibition presence/absence information is not that overtaking is prohibited (S42: NO), the ECU 10 ends the current information processing.

In step S43, the ECU 10 determines whether or not the communication vehicle 60A performed overtaking at the above position by the information processing unit 13. The information processing unit 13 makes the above determination based on a travel history of the communication vehicle 60A stored in the travel history database 5. When it is determined that the communication vehicle 60A performed overtaking (S43: YES), the ECU 10 proceeds to step S44. When it is not determined that the communication vehicle 60A performed overtaking (S43: NO), the ECU 10 ends the current information processing.

In step S44, the ECU 10 transmits the second overtaking prohibition presence/absence information as a correction candidate to the server 50 of the data center D by the information processing unit 13. Thereafter, the ECU 10 ends the current information processing.

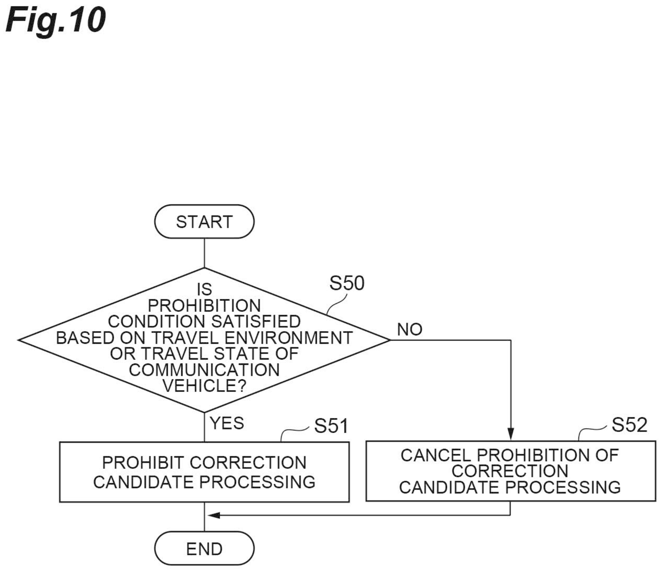

Next, correction candidate determination prohibition processing will be described. FIG. 10 is a flowchart showing an example of correction candidate determination prohibition processing. The correction candidate determination prohibition processing is performed, for example, when the information processing of FIG. 7 can be executed. The correction candidate determination prohibition processing is not essential.

As shown in FIG. 10, the ECU 10 determines whether or not a prohibition condition is satisfied based on a travel environment or a travel state of the communication vehicle 60A by the information processing unit 13 in step S50. For example, when a travel state of the communication vehicle 60A is autonomous driving, the information processing unit 13 determines that the prohibition condition is satisfied. When the ECU 10 determines that the prohibition condition is satisfied (S50: YES), the ECU 10 proceeds to S51. When the ECU 10 does not determine that the prohibition condition is satisfied (S50: NO), the ECU 10 proceeds to S52.

In step S51, the ECU 10 prohibits correction candidate processing by the information processing unit 13. While the prohibition condition is satisfied, the information processing unit 13 does not perform processing of a correction candidate of the second traffic regulation information. Thereafter, the ECU 10 ends the current correction candidate prohibition processing.

In step S52, the ECU 10 cancels prohibition of correction candidate processing. Thereafter, the ECU 10 ends the current correction candidate prohibition processing. When correction candidate processing is not prohibited, the current correction candidate prohibition processing is ended. The processing of FIGS. 6 to 10 has been described above using the communication vehicle 60A as an example, but the communication vehicles 60B to 60Z may also be able to execute the same processing.

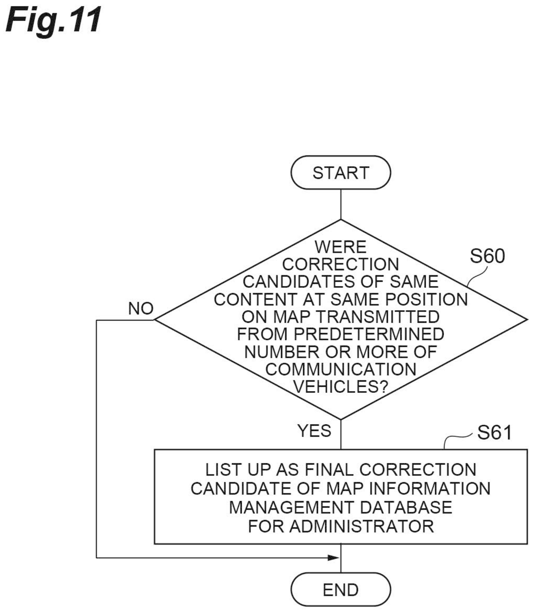

Next, processing in the server 50 of the data center D will be described. FIG. 11 is a flowchart showing an example of list-up processing in the server 50 of the data center D. The server 50 may execute the list-up processing periodically, for example, every day, or may be configured to execute the list-up processing when the number of transmissions from the communication vehicles 60 becomes a certain number or more.

As shown in FIG. 11, the server 50 determines whether or not correction candidates of the same content at the same position on a map are transmitted from a predetermined number or more of communication vehicles 60 by the correction necessity determination unit 51a in step S60. When the server 50 determines that correction candidates of the same content at the same position on a map are transmitted from a predetermined number or more of communication vehicles 60 (S60: YES), the server 50 proceeds to step S61. When the server 50 does not determine that correction candidates of the same content at the same position on a map are transmitted from a predetermined number or more of communication vehicles 60 (S60: NO), the server 50 ends the current list-up processing.

In step S61, the server 50 lists information of correction candidates determined to require correction as final correction candidates, and stores them in the map information management database 56. Administrators working at the data center D make a final judgment on correction of traffic regulation information corresponding to the listed correction candidate information, and then execute the correction. Thereafter, the server 50 ends the current list-up processing.

According to the information processing system 100 according to the present embodiment described above, when the contents of the first traffic regulation information and the second traffic regulation information at the same position are different, and when it is determined from the travel history of the communication vehicle 60 that the communication vehicle 60 was traveling so as to comply with the traffic regulation of the first traffic regulation information, the second traffic regulation information is processed as a correction candidate, so that it is possible to reduce a burden on a user as compared with a conventional method of causing the user to make a selection, and it is possible to appropriately process the second traffic regulation information as a correction candidate based on the travel history of the communication vehicle 60.

Further, according to the information processing system 100, when the contents of the first speed limit information and the second speed limit information at the same position are different, and when it is determined from the travel history of the communication vehicle 60 that the communication vehicle 60 was traveling so as to comply with the speed limit of the first speed limit information, the second speed limit information is processed as a correction candidate, which enables the second speed limit information to be appropriately processed as a correction candidate based on the travel history of the communication vehicle 60.

Similarly, according to the information processing system 100, when the contents of the first travel direction restriction information and the second travel direction restriction information at the same position are different, and when it is determined from the travel history of the communication vehicle 60 that the communication vehicle 60 was traveling so as to comply with the travel direction restriction of the first travel direction restriction information, the second travel direction restriction information is processed as a correction candidate, which enables the second travel direction restriction information to be appropriately processed as a correction candidate based on the travel history of the communication vehicle 60.

Further, according to the information processing system 100, when a content of the first overtaking prohibition presence/absence information is that overtaking is possible and a content of the second overtaking prohibition presence/absence information is that overtaking is prohibited at a position where the communication vehicle 60 performed overtaking, the second overtaking prohibition presence/absence information is processed as a correction candidate, which enables the second overtaking prohibition presence/absence information to be appropriately processed as a correction candidate based on the travel history of the communication vehicle 60.

Further, according to the information processing system 100, even when it is determined from the travel history of the communication vehicle 60 that the communication vehicle 60 was complying with the traffic regulation of the first traffic regulation information in a case where the contents of the first traffic regulation information and the second traffic regulation information at the same position are different, when the number of surrounding vehicles that comply with the traffic regulation of the first traffic regulation information is less than a certain threshold value, the second traffic regulation information is not processed as a correction candidate, so that it is possible to suppress inappropriate correction when reliability of the first traffic regulation information is low.

Further, according to the information processing system 100, even when the communication vehicle 60 is traveling so as to comply with the traffic regulation of the first traffic regulation information from the travel history of the communication vehicle 60 in a case where the contents of the first traffic regulation information and the second traffic regulation information at the same position are different, when a prohibition condition set in advance based on a travel environment or a travel state of the vehicle at the position is satisfied, processing of a correction candidate is prohibited, so that it is possible to suppress unnecessary processing of a correction candidate in a situation where there is a possibility that the communication vehicle 60 is complying with the traffic regulation of the first traffic regulation information regardless of an intention of the driver, such as during autonomous driving or traveling in a road construction section.

Although the embodiment of the present disclosure has been described above, the present disclosure is not limited to the above-described embodiment. The present disclosure can be carried out in various forms with various modifications and improvements based on knowledge of those skilled in the art, including the above-described embodiment.

In the above-described embodiment, processing of a correction candidate is performed in the ECU 10 of the communication vehicle 60, but processing of a correction candidate may be performed in the server 50. For example, the communication vehicle 60 transmits a travel history at a position where the first traffic regulation information and the second traffic regulation information are different, and the first traffic regulation information and the second traffic regulation information to the server 50. The server 50 determines whether or not the communication vehicle 60 is traveling so as to comply with the first traffic regulation information, and when it is determined that the communication vehicle 60 is traveling so as to comply with the first traffic regulation information, the server 50 counts the second traffic regulation information as a correction candidate. The communication vehicle 60 may transmit information of surrounding vehicles to the server 50.

The information processing system 100 may be a system implemented entirely within the communication vehicle 60. That is, the server 50 may be a separate system. In this case, a configuration (such as the ECU 10) for executing processing of a correction candidate in the communication vehicle 60 corresponds to the information processing system 100.

The server 50 may collect the first traffic regulation information acquired in the communication vehicle 60 in which the navigation system 2 is not mounted and the travel history of the communication vehicle 60. In this case, since the second traffic regulation information cannot be acquired, the communication vehicle 60 cannot determine necessity of correction of the second traffic regulation information. However, when the server 50 collects the first traffic regulation information (for example, a stop) from a plurality of communication vehicles 60 and a large number of travel histories indicating travel so as to comply with the first traffic regulation information are collected, it can be determined that the reliability of the first traffic regulation information is high. As a result, when the first traffic regulation information (for example, a stop) is not associated with the map information of the map information management database 56, the server 50 can incorporate the first traffic regulation information into the map information.

The communication vehicle 60A does not necessarily need to include the navigation system 2, as long as it has map information associated with traffic regulation information. In this case, the second traffic regulation information can be acquired from the map information.

## Claims

1. An information processing system that processes information related to traffic regulations of a road on which a vehicle (60) travels, the information processing system comprising:
a first traffic regulation information acquisition unit (11) configured to acquire first traffic regulation information, which is information of traffic regulations of the road on which the vehicle (60) travels, based on a road sign or a road surface marking captured in a captured image of an external camera (1) of the vehicle (60);
a second traffic regulation information acquisition unit (12) configured to acquire second traffic regulation information, which is information of traffic regulations of the same type as the first traffic regulation on the road, based on map information associated with information related to traffic regulations and positional information of the vehicle (60) on a map; and
an information processing unit (13) configured to process the second traffic regulation information as a correction candidate when, in a case where contents of the first traffic regulation information and the second traffic regulation information at the same position are different, it is determined from a travel history of the vehicle (60) that the vehicle (60) was traveling so as to comply with the traffic regulation of the first traffic regulation information.

2. The information processing system according to claim 1, wherein the first traffic regulation information is first speed limit information, which is information of a speed limit acquired based on a road sign or a road surface marking captured in the captured image of the external camera (1) of the vehicle (60),
the second traffic regulation information is second speed limit information, which is information of a speed limit acquired based on the map information and the positional information of the vehicle (60) on the map, and
the information processing unit (13) processes the second speed limit information as a correction candidate when, in a case where contents of the first speed limit information and the second speed limit information at the same position are different, it is determined from the travel history of the vehicle (60) that the vehicle (60) was traveling so as to comply with the speed limit of the first speed limit information.

3. The information processing system according to claim 1, wherein the first traffic regulation information is first travel direction restriction information, which is information of a travel direction restriction acquired based on a road sign or a road surface marking captured in the captured image of the external camera (1) of the vehicle (60),
the second traffic regulation information is second travel direction restriction information, which is information of a travel direction restriction acquired based on the map information and the positional information of the vehicle (60) on the map, and
the information processing unit (13) processes the second travel direction restriction information as a correction candidate when, in a case where contents of the first travel direction restriction information and the second travel direction restriction information at the same position are different, it is determined from the travel history of the vehicle (60) that the vehicle (60) was traveling so as to comply with the travel direction restriction of the first travel direction restriction information.

4. The information processing system according to claim 1, wherein the first traffic regulation information is first overtaking prohibition presence/absence information, which is information of presence/absence of overtaking prohibition acquired based on a road sign or a road surface marking captured in the captured image of the external camera (1) of the vehicle (60),
the second traffic regulation information is second overtaking prohibition presence/absence information, which is information of presence/absence of overtaking prohibition acquired based on the map information and the positional information of the vehicle (60) on the map, and
the information processing unit (13) processes the second overtaking prohibition presence/absence information as a correction candidate when, at a position where the vehicle (60) performed overtaking, a content of the first overtaking prohibition presence/absence information is that overtaking is possible and a content of the second overtaking prohibition presence/absence information is that overtaking is prohibited.

5. The information processing system according to any one of claim 1 to 4, wherein the information processing unit (13) does not process the second traffic regulation information as a correction candidate when, in a case where contents of the first traffic regulation information and the second traffic regulation information at the same position are different, even when it is determined from the travel history of the vehicle (60) that the vehicle (60) was traveling so as to comply with the traffic regulation of the first traffic regulation information, a number of surrounding vehicles (60), which are other vehicles (60) traveling around the vehicle (60), traveling without complying with the traffic regulation of the first traffic regulation information is a certain number or more.

6. The information processing system according to any one of claim 1 to 5, wherein the information processing unit (13) prohibits processing of the correction candidate when a prohibition condition set in advance based on a travel environment or a travel state of the vehicle (60) at the position is satisfied, even when it is determined from the travel history of the vehicle (60) that the vehicle (60) is traveling so as to comply with the traffic regulation of the first traffic regulation information.

7. An information processing method for an information processing system that processes information related to traffic regulations of a road on which a vehicle (60) travels, the method comprising:
acquiring first traffic regulation information, which is information of traffic regulations of the road on which the vehicle (60) travels, based on a road sign or a road surface marking captured in a captured image of an external camera (1) of the vehicle (60);
acquiring second traffic regulation information, which is information of traffic regulations of the same type as the first traffic regulation on the road, based on map information including information related to traffic regulations and positional information of the vehicle (60) on a map; and
processing the second traffic regulation information as a correction candidate when, in a case where contents of the first traffic regulation information and the second traffic regulation information are different, it is determined from a travel history of the vehicle (60) that the vehicle (60) was traveling so as to comply with the traffic regulation of the first traffic regulation information.

8. A program causing a computer (10) of a vehicle (60) to operate as an information processing system that processes information related to traffic regulations of a road on which the vehicle (60) travels, the program causing the computer (10) to operate as:
a first traffic regulation information acquisition unit (11) configured to acquire first traffic regulation information, which is information of traffic regulations of the road on which the vehicle (60) travels, based on a road sign or a road surface marking captured in a captured image of an external camera (1) of the vehicle (60);
a second traffic regulation information acquisition unit (12) configured to acquire second traffic regulation information, which is information of traffic regulations of the same type as the first traffic regulation on the road, based on map information including information related to traffic regulations and positional information of the vehicle (60) on a map; and
an information processing unit (13) configured to process the second traffic regulation information as a correction candidate when, in a case where contents of the first traffic regulation information and the second traffic regulation information at the same position are different, it is determined from a travel history of the vehicle (60) that the vehicle (60) was traveling so as to comply with the traffic regulation of the first traffic regulation information.
